# EUROPEAN PATENT APPLICATION

(11) **EP 2 660 917 A2**
(43) Date of publication of application: **06.11.2013**
(21) Application number: 11853326.4
(22) Date of filing: 28.12.2011
(51) Int. Cl.: H01M 8/12, H01M 8/24, H01M 8/02

(54) **UNIT CELL OF METAL-SUPPORTED SOLID OXIDE FUEL CELL, PREPARATION METHOD THEREOF, AND SOLID OXIDE FUEL CELL STACK USING THE UNIT CELL**

(30) Priority: 28.12.2010 KR 20100137302; 28.12.2010 KR 20100137303
(71) Applicant: Posco, Pohang Kyungsangbook-do 790-300 (KR)
(72) Inventor: PARK, Young-Min, Hwaseong-si Gyeonggi-do 445-320 (KR); SONG, Jung-Hoon, Seoul 156-761 (KR); AHN, Jin-Soo, Seoul 135-541 (KR); BAE, Hong-Youl, Pohang-si Kyungsangbook-do 790-751 (KR)
(74) Representative: Potter Clarkson LLP
(86) International application number: PCT/KR2011/010216
(87) International publication number: WO 2012/091446

(57) **Abstract**

The present invention relates to a unit cell of a metal-supported solid oxide fuel cell in which a manifold is formed integrally with electrodes, and includes a metal support; a first electrode formed on a surface of the metal support; an electrolyte formed on a surface of the first electrode; and a second electrode formed on a surface of the electrolyte and having a polarity opposed to that of the first electrode, wherein the metal support, the first electrode, the electrolyte, and the second electrode are formed with a manifold, a fluid passage. The present invention also relates to a method of manufacturing a unit cell of a metal-supported solid oxide fuel cell, and a stack using the solid oxide fuel cell.

## Description

### [Technical Field]

The present invention relates to a solid oxide fuel cell (SOFC), and more particularly, to a unit cell of a metal-supported SOFC, integrated with a manifold, a method of manufacturing the same, and a solid oxide fuel cell stack using the unit cell.

### [Background Art]

A solid oxide fuel cell (SOFC) is formed as a structure in which a plurality of electricity producing units, each comprised of a unit cell and a separator, are stacked. The unit cell includes an electrolyte layer, a cathode (air electrode) positioned on one side of the electrolyte layer, and an anode (fuel electrode) positioned on the other side of the electrolyte layer.

When oxygen is supplied to the air electrode and hydrogen is supplied to the anode, oxygen ions, produced by a reduction reaction of oxygen passing through the electrolyte layer, move to the anode, and react with hydrogen supplied to the anode to produce water. In this regard, while electrons produced in the anode are transferred to the air electrode and consumed, an electric current is produced, which flows to an external circuit, and the unit cell produces electrical energy using this electron flow.

A fuel cell comprised of an electrolyte, an air electrode and a fuel electrode is commonly known as a unit cell, and since the amount of electrical energy produced by a single unit cell may be very limited, a stack in which a plurality of unit cells are connected in series is manufactured so as to allow fuel cells to be used in the production of electricity. The air electrodes and the fuel electrodes of the unit cells are electrically connected to each other so as to form a stack, and a separator is used for preventing fuel from being mixed with air.

The separator, the fuel electrode, the electrolyte, and the air electrode are a single unit constituting the stack, the separator being formed of a ferrite-based stainless steel based on Fe-Cr, a passage (flow passage) through which air moves is provided to the air electrode and the fuel electrode, and a function for electrical connectivity between cells is required.

Meanwhile, a metal-supported solid oxide fuel cell has a structure in which a support is formed of nickel or stainless steel, an electrode (a fuel electrode or an air electrode) is formed to contact the support, an electrolyte is formed to contact the electrode, and an electrode is formed to contact the electrolyte. Since the metal-supported solid oxide fuel cell uses a metal support having high strength, instead of a ceramic support, a unit cell may endure a high amount of stress during the assembly of a stack, and thus, a gasket type seal, instead of a glass seal, may be advantageously applied.

However, even in this case, since a cell frame formed with a manifold and a glass seal for brazing or sealing a cell are used for forming a stack, a complicated process is required and manufacturing costs may increase.

### [Disclosure]

### [Technical Problem]

An aspect of the present invention is to provide a metal-supported solid oxide fuel cell and a method of manufacturing the same in which the manufacturing process is simple and economic feasibility is superior, and a solid oxide fuel cell stack.

### [Technical Solution]

According to an aspect of the present invention, there is provided a unit cell of a metal-supported solid oxide fuel cell including:
a metal support;
a first electrode formed on a surface of the metal support;
an electrolyte formed on a surface of the first electrode; and a second electrode formed on a surface of the electrolyte and having a polarity opposed to that of the first electrode,
wherein the metal support, the first electrode, the electrolyte, and the second electrode are provided with a manifold, a fluid passage.

According to another aspect of the present invention, there is provided a method of manufacturing a unit cell of a metal-supported solid oxide fuel cell, the method including:
manufacturing a metal support, a first electrode, an electrolyte, and a second electrode;
stacking the metal support, the first electrode, the electrolyte, and the second electrode to form a stack;
sintering the stack; and
forming a manifold in the sintered stack.

According to another aspect of the present invention, there is provided a solid oxide fuel cell stack including:
a plurality of unit cells; and
a separator disposed between the two or more unit cells and connected in series,
wherein a seal is formed between the unit cell and the separator.

### [Advantageous Effects]

According to the present invention, since the manifold of the metal-supported solid oxide fuel cell is formed in the cell, the metal-supported solid oxide fuel cell does not need a cell frame, and thus the process is simple and the manufacturing costs incurred in the manufacturing the stack may be reduced.

### [Brief Description of the Drawings]

Fig. 1 is a cross-sectional view of an example of a metal-supported solid oxide fuel cell according to the present invention.
Fig. 2 is a process flow diagram for manufacturing a metal-supported solid oxide fuel cell according to the present invention.
Fig. 3 is a cross-sectional view of another example of a metal-supported solid oxide fuel cell according to the present invention.
Fig. 4 is a schematic disassembled view of an example of a metal-supported solid oxide fuel cell stack according to the present invention.

### [Best Mode]

Hereinafter, the present invention will be described in detail.

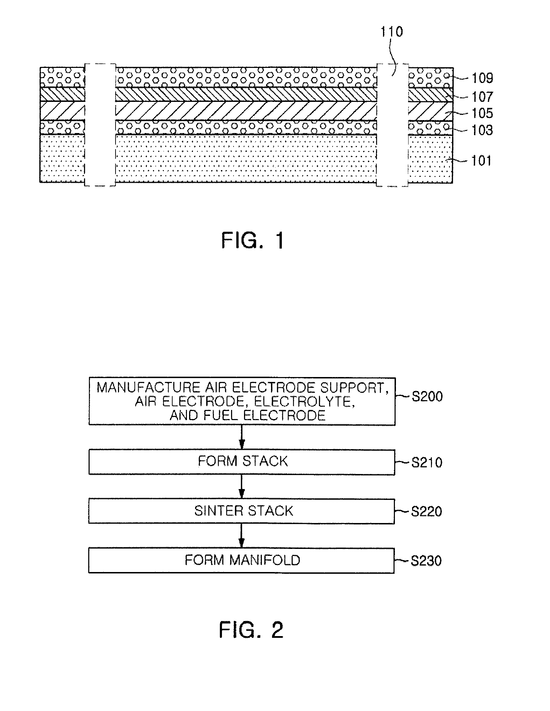

First, a detailed description of a unit cell of a metal-supported solid oxide fuel cell will be given with reference to Fig. 1.

A unit cell of a metal-supported solid oxide fuel cell according to the present invention includes a metal support 101. The metal support is preferably formed of a porous metal, has a mesh or foam form, and is preferably formed of stainless steel, an iron alloy or a nickel alloy. The metal support may include 20 % by weight of at least one selected from the group consisting of Zr, Ce, Ti, Mg, Al, Si, Mn, Fe, Co, Ni, Cu, Zn, Mo, Y, Nb, Sn, La, Ta, V and Nd oxides. If the oxide content exceeds 20 % by weight, the elasticity of the metal support decreases, so that the fuel cell may be unresistant to impact.

A first electrode is formed on a surface of the metal support. A fuel electrode or air electrode is formed as the first electrode. In Fig. 1, the first electrode is an air electrode 103, and in this case, the metal support 101 is known as an air electrode support. Meanwhile, in the case in which the first electrode is a fuel electrode, the metal support is known as a fuel electrode support.

The air electrode 103 is preferably La.Sr₁₋ₓMnO₃₋ (LSM) or LaₓSr₁₋ₓCo_{y}Fe_{1-y}O₃- (LSCF) having a Perovskite structure, and in the case in which the first electrode is a fuel electrode, the first electrode is preferably formed of a material such as Ni-YSZ(Yttria Stabilized Zirconia), Ru/YSZ cermet, Ni/SDC cermet, Ni/GDC cermet, Ni, Ru, Pt, or the like.

Meanwhile, a diffusion stop layer 105 is preferably formed between the air electrode 103 and an electrolyte 107. The diffusion stop layer 105 may include an oxygen ion conductor containing Ce as a main component. The diffusion stop layer 105 functions to prevent a reaction between the air electrode 103 and the electrolyte 107.

The electrolyte 107 is formed between the first electrode and a second electrode. The electrolyte 107 preferably includes an oxygen ion conductor containing Zr as a main component. Concrete examples of the oxygen ion conductor may include ZrO₂-based (CaO, MgO, Sc₂O₃, Y₂O₃ doped Zr02), CeO₂-based: Sm₂O₃, Gd₂O₃, Y₂O₃ doped CueO₂), Bi₂O₃-based (CaO, SrO, BaO, Gd₂O₃, Y₂O₃ doped Bi₂O₃), Perovskite oxides ((La, Sr) (Ga, Mg)O₃-δ, Ba(Ce, Gd)O₃-δ), and the like.

The second electrode is formed to be in contact with the electrolyte. Since the first electrode in Fig. 1 is the air electrode 103, the second electrode is a fuel electrode 109. That is, the first electrode and the second electrode indicate different electrodes.

It is preferable that a unit cell of the fuel cell of the present invention include at least one manifold, formed to penetrate the stack in which the metal support, the first electrode, the electrolyte, and the second electrode are stacked. The manifold is a fluid passage for supplying or discharging air or fuel. In existing fuel cells, since a manifold is formed separately from a unit cell, a process of bonding the manifold and the unit cell, using a glass seal, such that fuel or air is not leaked through a sealed portion, is required. However, since the manifold and the unit cell are formed integrally, there is no need to bond the manifold and the unit cell to one another, and the manufacturing of the stack is simple, to help enhance reliability thereof.

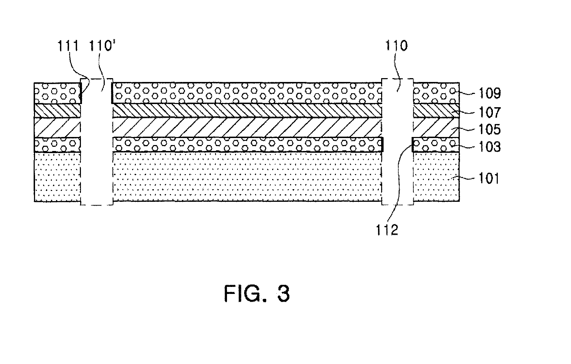

The manifold is preferably formed with an air or fuel blocking part. The use of the air or fuel blocking part will hereinafter be described with reference to Fig. 3. As illustrated in Fig. 3, a manifold 110' allowing air to pass therethrough is preferably formed with a second blocking part 111 preventing air from being introduced into the fuel electrode 109, the second electrode, and a manifold 110 allowing fuel to pass therethrough is preferably formed with a first blocking part 112 preventing fuel from being introduced into the air electrode 103, the first electrode.

As described above, since the unit cell of the fuel cell according to the present invention has the manifold penetrating the stack constituting the cell, a separate cell frame is not needed.

Hereinafter, a manufacturing method of the present invention will be described in detail with reference to Fig. 2. Fig. 2 is a process flow diagram illustrating a manufacturing method of the present invention.

First, a metal support, a first electrode, an electrolyte and a second electrode are manufactured (S200). The metal support is manufactured by a tape casting method or an extrusion method, and the first electrode, the electrolyte and the second electrode are manufactured by any one of a tape casting method, a screen printing method and a wet spraying method.

A stack is then formed (S210). The stack is formed by sequentially stacking the metal support, the first electrode, the electrolyte and the second electrode.

The formed stack is sintered (S220). The sintering is preferably performed in a nitrogen or a reduction atmosphere. The sintering is preferably performed in a temperature range of 1300-1400°C, and the gas atmosphere is determined by controlling the ratio of nitrogen, argon, hydrogen, or each gas.

Meanwhile, in the case in which a solid oxide no containing chromium is used, the sintering may be performed in an air atmosphere and then reduction may be performed in a temperature range of 800-1000°C to manufacture a cell. Thus, in the case in which a solid oxide is used as the fuel, the sintering and reducing in air may suppress coarsening of Ni grains in the functional layer of the fuel electrode, thus helping to enhance cell performance.

A manifold is formed in the sintered stack (S230). The manifold is preferably formed using punching, a laser, or a water jet. Since the existing ceramic support type cell has a degree of brittleness after the sintering, it is impossible to form a manifold using punching, and even in the case that a laser or a water jet is used therefor, the existing ceramic support type cell exhibits a high defect rate. However, in the metal-supported cell, it is possible to form the manifold using various methods, such as a punching process, a laser etching process, a water jet cutting process, or the like.

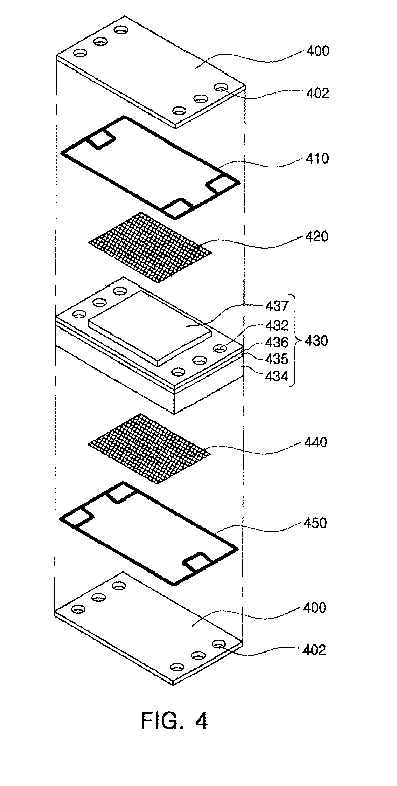

Hereinafter, a metal-supported solid oxide fuel cell stack will be described in detail with reference to Fig. 4. A metal-supported solid oxide fuel cell stack of the present invention includes a unit cell 430 of a solid oxide fuel cell comprised of a metal support 434, a fuel electrode 435 formed on the metal support, an electrolyte 436, and an air electrode 437, and at least one separator 400 electrically connecting the air electrode 437 and the fuel electrode 435 of the unit cell 430 of the solid oxide fuel cell.

While Fig. 4 illustrates a stack, stacked on the metal support in a sequence of fuel electrode/electrolyte/air electrode, the present invention is not limited to the sequence above, and may be stacked in a sequence of air electrode/electrolyte/fuel electrode.

The solid oxide fuel cell stack of the present invention includes manifolds 402 and 432 for supplying and discharging fuel and air to the air electrode 437 and the fuel electrode 435, and the manifolds 402 and 432 are preferably formed integrally with the solid oxide fuel cell.

It is preferable that the solid oxide fuel cell stack include seals 410 and 450 between the solid oxide fuel cell 430 and the separator 400.

Although not illustrated in the drawings, a buffer layer may be additively included between the electrolyte and the air electrode of the unit cell if necessary. When YSZ contained in the fuel electrode reacts with (La,Sr)(Co,Fe)O₃ contained in the air electrode, a material having a high level of resistance, such as La₂ZrO₇, may be created to reduce the efficiency of the fuel cell. Therefore, to suppress the above-described reaction, it is preferable that a buffer layer be formed between the electrolyte and the air electrode.

The seals 410 and 450 may be glass seals, and preferably gasket type seals 410 and 450 as illustrated in Fig. 4. The gasket type seals do not need to be subject to a high temperature heat treatment, are deformed when being pressed at room temperature to perform a sealing, and include, for example, a mica-based seal.

The metal-supported fuel cell, in which the fuel electrode, the electrolyte and the air electrode are formed on the metal support, has characteristics that may allow the metal-supported fuel cell to endure far higher amounts of pressure than the fuel electrode support type or the electrolyte support type solid oxide fuel cell. The glass seal requires a pressure of not less than about 1 kg/cm² for sealing, whereas the gasket type seal requires a high pressure of not less than 10 kg/cm² for sealing. As the area of the unit cell increases, the amount of pressure required increases steadily. Since the electrolyte support type fuel cell or the fuel electrode support type fuel cell has relatively weak mechanical strength and is structurally damaged or deformed when a high amount of surface pressure is applied thereto, the electrolyte support type fuel cell or the fuel electrode support type fuel cell may not employ the gasket type seal. However, since the fuel cell of the present invention uses a metal support having a high amount of mechanical strength, it may endure a high amount of compressive stress of not less than 10 kg/cm², so the use of the gasket type seal does not cause deformation or damage of the unit cell.

In the present invention, the unit cell of the solid oxide fuel cell includes the manifolds 402 and 432 for supplying and discharging fuel and air, which are formed integrally. When the manifolds 402 and 432 are formed integrally, it is possible to configure a fuel cell stack without a cell frame, used for applying a unit cell to an existing stack. That is, while the existing fuel cell stack is manufactured by bonding a unit cell to a cell frame having a manifold to form a unit cell-cell frame bonding structure, and alternately stacking the unit cell-cell frame bonding structure and a separator, the use of the cell frame requires a seal formed between the unit cell and the cell frame using a glass so as to prevent gases from being leaked between the unit cell and the cell frame. However, when the manifolds are formed in the metal support of the unit cell itself, as described above, the use of the cell frame is not required, so that a sealing between the unit cell and the cell frame is not required. Therefore, it is possible to manufacture a fuel cell stack having a much simpler structure than the existing fuel cell stack which requires a double sealing (a seal between cell frame and unit cell and a seal between separator and manifold).

The manifold is preferably formed with an air or fuel blocking part.

Alternatively, a fuel electrode collector 440 and an air electrode collector 420 may be further included in the fuel cell stack of the present invention so as to enhance collection performance between the solid oxide fuel cell and the separator. The fuel cell collector 440 is provided for enhancing collection toward the fuel electrode and making it easier to move a fuel gas, and is preferably formed of a metal foam. More concretely, the fuel electrode collector of the present invention may be more preferably made of, but is not limited to, a metal foam, formed of a metal such as Ni and/or an Ni alloy.

Meanwhile, the air electrode collector 420 is provided for enhancing the collection of the air electrode and making it easy to smoothly move air, and is preferably made of a metal foam. More concretely, the air electrode collector of the present invention is more preferably made of, but is not limited to, a metal foam, formed of a metal such as stainless steel, an Fe-Ni alloy, an Fe-Ni-Cr alloy and/or an Fe-Ni-SiC alloy.
Meanwhile, it is general that a passage for supplying air and fuel to the fuel electrode and the air electrode is formed in the separator of the solid oxide fuel cell, and the fuel cell of the present invention may also use a separator formed with a passage. Also, when the fuel cell of the present invention further includes a collector made of a metal foam, a separator, not having a passage formed therein, may be used. This is because the metal foam may perform both a collection function and a passage function.
Also, although not illustrated in the drawings, the fuel cell of the present invention may further include a stopper for preventing a clearance from being generated between the unit cell and the separator due to the collector.

## Claims

1. A unit cell of a metal-supported solid oxide fuel cell comprising:
a metal support;
a first electrode formed on a surface of the metal support;
an electrolyte formed on a surface of the first electrode; and
a second electrode formed on a surface of the electrolyte and having a polarity opposed to that of the first electrode,
wherein the metal support, the first electrode, the electrolyte, and the second electrode are formed with a manifold, a fluid passage.

2. The unit cell of the metal-supported solid oxide fuel cell of claim 1, wherein the first electrode is an air electrode and the second electrode is a fuel electrode.

3. The unit cell of the metal-supported solid oxide fuel cell of claim 2, wherein the manifold formed in the first electrode is formed with a first blocking part for blocking flow of fuel toward an inside of the first electrode, and the manifold formed in the second electrode is formed with a second blocking part for blocking flow of fuel toward an inside of the second electrode.

4. The unit cell of the metal-supported solid oxide fuel cell of claim 1, wherein the metal support is any one of stainless steel, an iron alloy, and a nickel alloy.

5. The unit cell of the metal-supported solid oxide fuel cell of claim 1, wherein the metal support comprises 20 % by weight of at least one selected from the group consisting of Zr, Ce, Ti, Mg, Al, Si, Mn, Fe, Co, Ni, Cu, Zn, Mo, Y, Nb, Sn, La, Ta, V and Nd oxides.

6. The unit cell of the metal-supported solid oxide fuel cell of claim 1, wherein the metal support has a mesh shape or a foam shape.

7. The unit cell of the metal-supported solid oxide fuel cell of claim 2, wherein the air electrode is made of LSM (LaₓSr₁₋ₓMnO₃₋) or LSCF (LaₓSr₁₋ₓCo_{y}Fe_{1-y}O₃-) having a Perovskite structure.

8. The unit cell of the metal-supported solid oxide fuel cell of claim 2, wherein the fuel electrode is any one selected from the group consisting of Ni-YSZ(Yttria Stabilized Zirconia), Ru/YSZ cermet, Ni/SDC cermet, Ni/GDC cermet, Ni, Ru, and Pt.

9. A method of manufacturing a unit cell of a metal-supported solid oxide fuel cell, the method comprising:
manufacturing a metal support, a first electrode, an electrolyte, and a second electrode;
stacking the metal support, the first electrode, the electrolyte, and the second electrode to form a stack;
sintering the stack; and
forming a manifold in the sintered stack.

10. The method of claim 9, wherein the metal support is manufactured by a tape casting method or an extruding method.

11. The method of claim 9, wherein the first electrode, the electrolyte and the second electrode are manufactured by any one of a tape casting method, a screen printing method, and a wet spraying method.

12. The method of claim 9, wherein the sintering is performed in a nitrogen or reduction atmosphere.

13. The method of claim 9, wherein the manifold is formed by any one of a punching, a laser and a water jet.

14. A metal-supported solid oxide fuel cell stack comprising:
a plurality of unit cells of any of claims 1 to 8; and
a separator disposed between the two or more unit cells and connected in series,
wherein a seal is formed between the unit cell and the separator.

15. The metal-supported solid oxide fuel cell stack of claim 14, wherein the seal is a gasket type seal.

16. The metal-supported solid oxide fuel cell stack of claim 15, wherein the gasket type seal performs a sealing when being pressed, and is dissembled through a pressure reduction.
